# EUROPEAN PATENT SPECIFICATION

(11) **EP 1 480 542 B1**
(45) Date of publication and mention of the grant of the patent: **13.07.2005**
(21) Application number: 03719997.3
(22) Date of filing: 27.02.2003
(51) Int. Cl.: A47J 37/04

(54) **APPARATUS FOR COOKING AND DISPENSING FOOD PRODUCTS**
GERÄT ZUM KOCHEN UND AUSTEILEN VON NAHRUNGSMITTELN
APPAREIL POUR LA CUISSON ET LA DISTRIBUTION DE PRODUITS ALIMENTAIRES

(30) Priority: 01.03.2002 ZA 200201719
(43) Date of publication of application: 01.12.2004
(73) Proprietor: De Kock, Cilliers, 1685 Midrand (ZA)
(72) Inventor: De Kock, Cilliers, 1685 Midrand (ZA)
(74) Representative: Dearing-Lambert, Peter Richard
(86) International application number: PCT/ZA2003/000034
(87) International publication number: WO 2003/073898

(56) References cited:
- DE-A- 3 904 008
- US-A- 1 733 766
- US-A- 3 645 196
- US-A- 4 549 476

## Description

### FIELD OF THE INVENTION

The present invention relates to an apparatus for cooking and dispensing food products. The apparatus may be used to prepare fast food products such as fried potato chips.

### BACKGROUND TO THE INVENTION

Various types of devices have been proposed for preparing hot food products such as fried fish, fried potato chips, etc. Known devices have a number of drawbacks which preclude their general use. Some devices, for example as disclosed in US-A-3 645 196, are adapted to provide food product continuously in regular succession. This is not practical in cases where demand is irregular or when continuous conveyor type production is not desired. In others cases the known devices may be too expensive to operate or too expensive to manufacture.

The time taken in order to cook a food product with known devices may also be too long to be of practical value for machines at fast food outlets. In addition, known systems have drawbacks where the apparatus' are not properly sealed resulting in heat loss and ineffective operational conditions.

In certain devices food products can at the same time contact a moving part and a non-moving part to become trapped or pinched between the two parts and as a result, the food products can be crushed thereby. Such mashing of the food product can lead to clogging of the moveable parts. In addition, the mashing of products may lead to the undesirable introduction of food particles into the heating liquid.

Any of these consequences can impede the operation of the device and accelerate the need to clean the apparatus and/or to clean or replace the heating liquid. This adds to the maintenance and operating costs of such apparatus.

Therefore, it would be advantageous to have a means for providing a fried food product on an intermittent basis with a minimum of attention under safe frying conditions. It would also be advantageous to have a means for the quality production of food products under heating conditions suitable for proper functioning of the apparatus.

### SUMMARY OF THE INVENTION

The invention provides an apparatus for cooking and dispensing food, said apparatus including one or more rotatable food receiving pockets in which food is submerged in a heated heat transfer fluid, the rotation of the pockets assisting the food to pass through said pockets and to facilitate the heating of the food.

The pockets may be associated with a drum.

The pockets may pass through and extend from the drum.

The apparatus includes heat transfer fluid life extension means for inhibiting food debris from coming into contact with heat transfer fluid heated to a temperature which causes the food debris to burn or otherwise detrimentally affect the quality of the heat transfer fluid.

Said life extension means may include a guide for guiding the food debns towards a cold zone of the heat transfer fluid.

The guide may include a separation device which prevents the free movement of the food debris through the heat transfer fluid and guides the food debris away from heating elements towards a drain portion of the apparatus.

The separation device may be a sheet having a portion located within the heat transfer fluid and at least partially screening the heating elements from the food debris.

The heat transfer fluid level is at or above at least a portion of the separation device so that food debris is carried by the heat transfer fluid over the separation device.

Said life extension means may include one or more perforated elements which strain at least some of the food debris from the heat transfer fluid.

The perforated elements may operate in sympathy with said drum.

The food receiving pockets may be perforated over at least a portion of their extent.

The perforations of the food receiving pockets may be concentrated in one or more zones of the food receiving pockets.

The food receiving pockets may be the perforated elements referred to above.

The food receiving pockets may be rotatable relative to said drum.

The food is not likely to become trapped between receiving pockets and the drum but is located within the receiving pockets. Thus, the risk of food becoming mangled or mashed is reduced and accordingly less food debris is produced thereby extending the life of the heat transfer fluid.

The volume of the heating fluid which is displaced by the food in the food pockets causes some of the food debris in the heat transfer fluid to be displaced to a zone of the heat transfer fluid which is separated from the heating elements by the separation device.

The volume of the heating fluid which is displaced by the food in the food pockets causes some of the food debris in the heat transfer fluid to be displaced through a filter which removes said debris from the heat transfer fluid.

The heat transfer fluid may be a cooking oil, water, or other food quality heat transfer medium.

The drum and food receiving pockets may be used or installed in a frying apparatus as well as in any other type of food preparation and dispensing apparatus.

The perforated pockets may be tubular.

The perforations may be at an end zone of the pockets.

The drum and pockets may be rotationally displaceable between an upwardly directed inclined position and a downwardly directed inclined position by partial rotation of said drum and pockets.

The pockets may also rotate in a plane perpendicular to the rotational displacement of the drum.

Thus, a food product may be placed in one or more of the pockets which do not include elements which move relative to one another during rotation. Thus, during a rotational movement, the entire drum including all of the pockets rotate as a unit.

Accordingly, as can be appreciated, this means that the food product is not susceptible to being pinched between moving elements and therefore the creation of mashed food products can be avoided.

In this specification, the words "integral", "integral unit" or the like, unless indicated to the contrary, shall thus be understood as characterizing the expression "receiving pockets", or any similar or analogous expression as being a body which does not include elements which move relative to one another during rotation.

According to a further aspect of the invention, there is provided a cooker apparatus including:
- a drum;
- one or more food receiving pockets associated with the drum, said pockets being configured for cooking food product in a heating liquid, which pockets have an open end;
- cover means for covering at least one open end of said pockets; and
- rotation means for rotatably mounting said drum and pockets to a housing such that said drum is rotatable with respect to said housing about a horizontal axis; and
- at least one lever to partially rotate the said drum and pockets about the axis to displace the pockets between an upwardly directed inclined position and a downwardly directed inclined position.
   The pockets may include a tube with a cylindrical body with walls including a plurality of perforations at a lower portion thereof which defines an integral food pocket for releasably holding the food.
   Therefore, the food pocket holds food products during immersion of the food product in a heating liquid.
   Each drum with its associated food pockets is an integral unit and may function independently from other drums.
   The pockets are disposed radially about the rotational axis of the drum and are each open at one end for the introduction of food products to the interior thereof into the food pocket, and for the removal of food products therefrom.
   When in operation, the open end of the pocket or receptacle member is closed by a cover means whereby a substantially sealed unit is established for heat flow control, spillage is inhibited and safety conditions are enhanced.
   The cover means need to be displaced for the introduction of food products to the interior of the pocket and for the removal of food products therefrom.
   Generally, the circumferential dimensions of the pocket at its open end corresponds with the circumferential dimensions of a cooked food container so that when the container is releasably positioned and snugly fitted over the open end of the said pocket, cooked food products are discharged from the food pocket into the container for serving purposes.
   It should be appreciated that the cooking apparatus may function without the aforesaid containers where cooked food products are discharged from the food pockets onto a receiving surface below the pocket open ends, for example, when larger volumes of food products need to be accommodated.
   The side walls of the drums and/ or the pockets may have circular cross-sections.
   The pockets may be of equal size for all drums of an apparatus.
   The rotation means for rotatably and removably mounting said drum may take any form which allows for rotation of the drum about its rotational axis, for example, a spindle shaft.
   The rotation means for rotatably and removably mounting said drum may be a vapour lubricated seat in which the drum rests and rotates on a vapour cushion.
   The drums may include locking means to prevent unauthorized use thereof and a counter device for measuring the amount of portions fried or cooked. Said counter device may correlate the number of times the drum was rotationally displaced about its rotational axis through a predetermined arc.
   The apparatus may include immersing means for immersing and withdrawing at least the pockets, or both the pockets and a portion of the drum, into a receptacle of the heat transfer fluid.
   The immersing means may be incorporated in the means for rotatably and removably mounting said drum.
   The immersing means may include a displacement mechanism.
   The displacement mechanism may have a pivot arm, the pivot arm being fixed to the drum.
   The drum may include at least one handle for handling the drum when it is detachably removed for cleaning purposes.
   The apparatus may include at least one heating means. The heating means may be in the form of a helical coil positioned in the receptacle of the heat transfer fluid.
   The heating means may include a gas burner and means for distributing the heat generated by burning the gas to the heat transfer medium.
   The apparatus may include a housing in which the heat transfer fluid receptacle is housed.
   The housing may also house the drum.
   The heat transfer fluid receptacle may be positioned at such a location in the housing that the lower portion of the pockets i.e. the perforated portion of the pockets, is immersed in the heat transfer fluid when the drum is partially rotationally displaced by a predetermined extent.
   The heat transfer receptacle may include a sludge outlet in order to facilitate the removal of the food debris thereby prolonging the useful life of the heat transfer fluid.
   The heat transfer receptacle may include the life extension means described above, including but not limited to oil filters, screens, separators, and the like.
   It should be appreciated that the heating means may also be positioned in close proximity to the receptacle containing the heat transfer fluid.
   The apparatus may include means for automatically coordinating the activity(ies) of each of the parts thereof by means of an automatic control means provided with the necessary rules and instructions.
   The automatic control means may comprise suitable mechanisms for activating and controlling the various parts of the apparatus. Such control means are known in the art and will thus not be particularly described herein.
   The control means may, for example, comprise any suitable timer control mechanisms for controlling, in a timed, cooking cycle sequence, the amount of food product to be inserted in a pocket, the cooking time (i.e. the time food product is immersed in cooking liquid), the start and duration of food product discharge, the start and duration of immersion time, the activation/deactivation of the rotation of the drum.
   It should be noted that switches, buttons and timers activating the automatic control means should be preferably, situated at locations on the front panel of the housing to the side thereof for easy access and to enhance safety conditions.
   The rotation means for rotating the drum or the timing to do so manually, may be controlled by any suitable coordinating control mechanism such that in the immersion position, fresh food products are introduced into the receptacle member at the desired cooking temperature. In this position, the pocket is positioned with an open end directed upwardly.
   After the cooking or frying process is completed as controlled by any suitable coordinating control mechanism, the pocket may be directed downwardly to a discharging position for discharge of the cooked or fried food products.
   The drum rotation, and thus the orientation of the pockets, may, however, if desired be controlled to an intermediate position, i.e. between the immersion and discharge positions to allow cooking fluids to drain away before discharge of the cooked food products.
   It should be appreciated that if desired, vibrating means may be provided for the pockets to vibrate in order to shake off free cooking liquid from food products and/or the pockets after the frying or cooking process has been completed.
   A device in accordance with the present invention, if desired, may be incorporated into a vending machine wherein the initial food product is in a frozen form (e.g. frozen potato chips), the hot product being dispensed to a customer in a relatively short period of time. In such a case , discharging or rotation of the drum can only occur in this particular case, on payment of the necessary remuneration.
   The various parts of the apparatus may be made of any material suitable for use in cooking a food product, (e.g stainless steel or the like); it should be kept in mind, however, that the physical characteristics of the various elements must be such as to allow the elements to adequately function in a cooking environment.
   Additional heat transfer fluid may be stored in a separate liquid container for refilling the tank located in the chamber.
   The refilling may be achieved by positioning the liquid container higher than the receptacle, for example, on top of the housing, so that the liquid container may be in flow communication with the heat transfer fluid receptacle so that heat transfer fluid may flow from the liquid container to the receptacle when desired.
   Conventional mechanisms and devices, i.e. taps etc. may be provided to control the liquid flow as determined by a set minimum liquid level in the tank.

### DESCRIPTION OF THE DRAWINGS

An example embodiment of the invention is illustrated in the drawings wherein:
**FIG. 1** is a three dimensional view of the present invention;
**FIG. 2** is side view of FIG. 1 depicting the cooking apparatus, partially cut away to show the interior;
**FIG. 3** is a rear view of FIG. 1, according to the invention;
**FIG. 4** is a side view of FIG. 1 according to the invention;
**FIG. 5** is a front view of FIG. 1;
**FIG. 6** is a three dimensional view of the present invention partially cut away to show the interior;
**FIG. 7** is a rear view of FIG. 1, viewed with the back wall partially cut away; and
**FIG. 8** is a three dimensional view of the drum including a food receiving pocket.

### DESCRIPTION OF A PREFERRED EMBODIMENT

A particular example embodiment of the invention will hereinafter be described in more detail with reference to the figures.

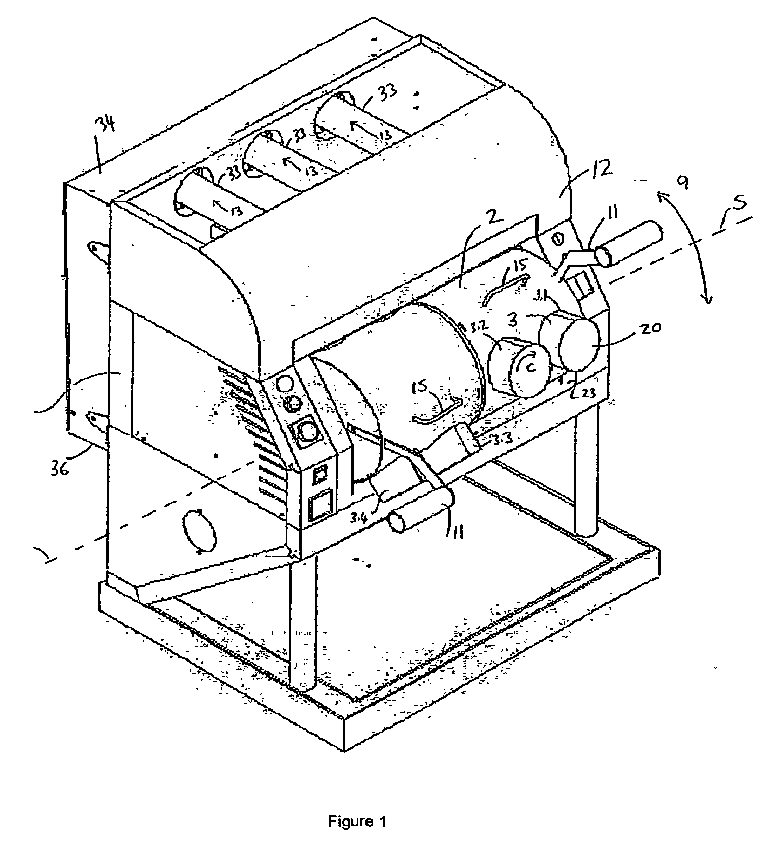

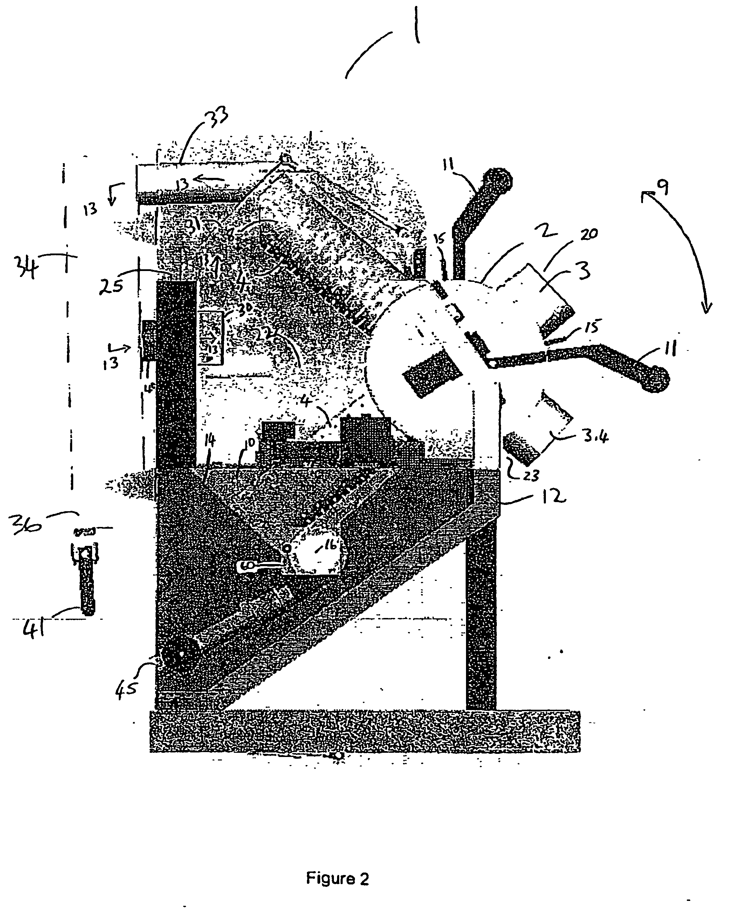

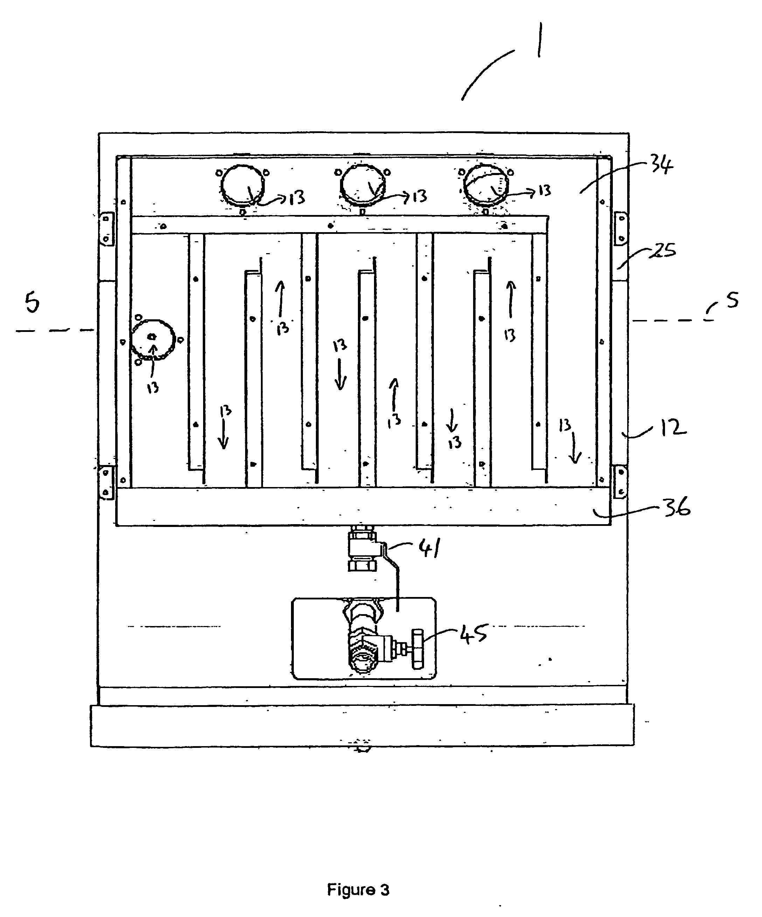

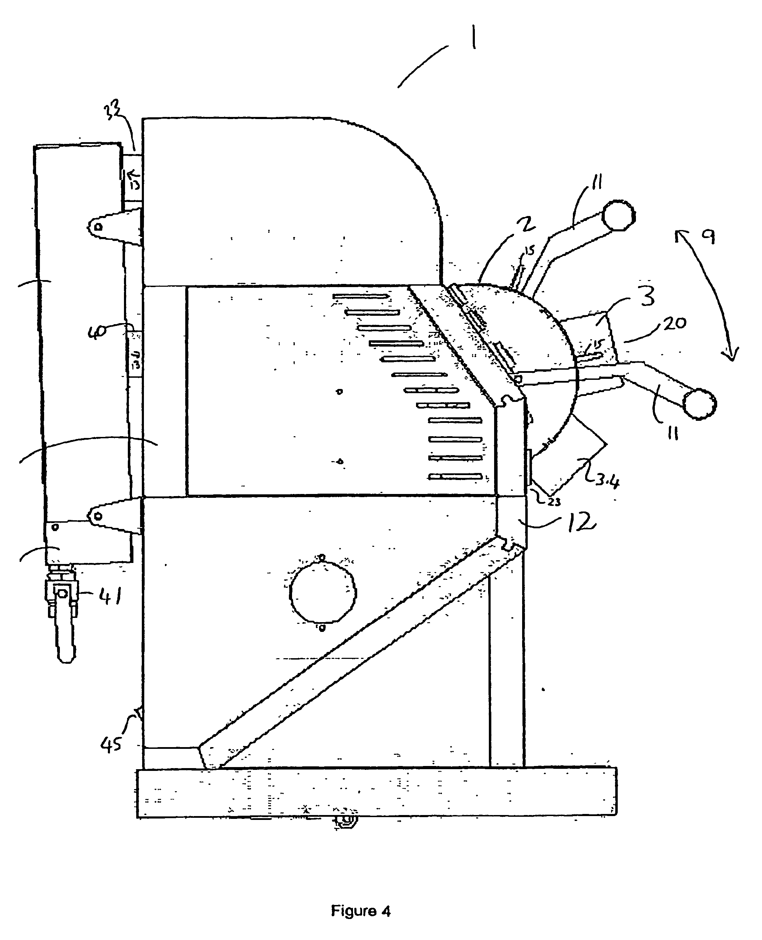

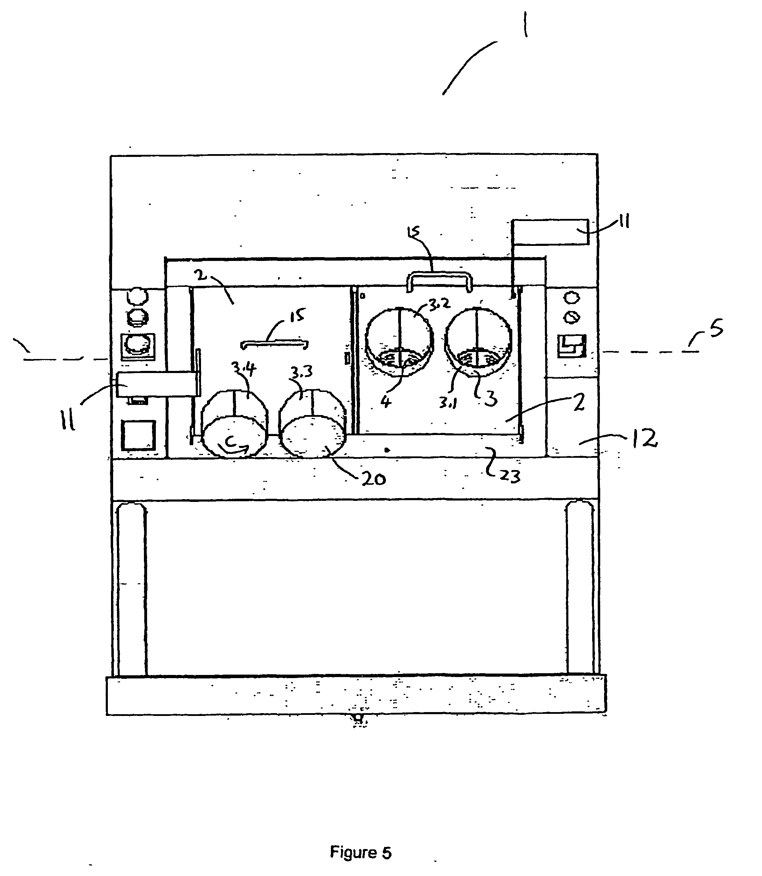

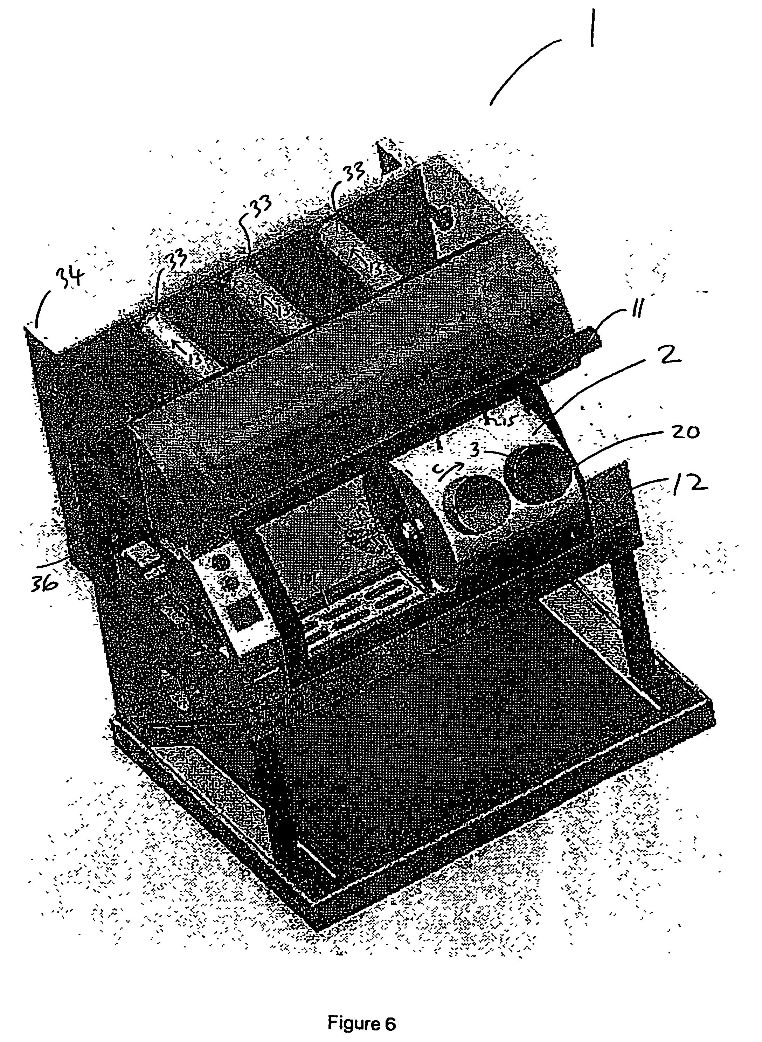

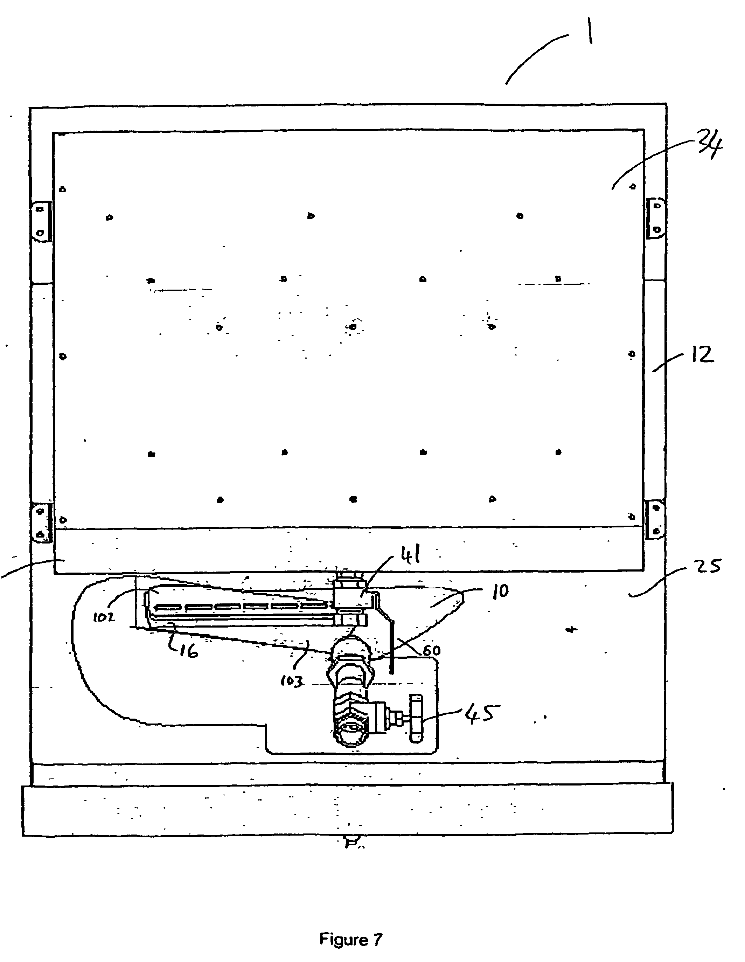

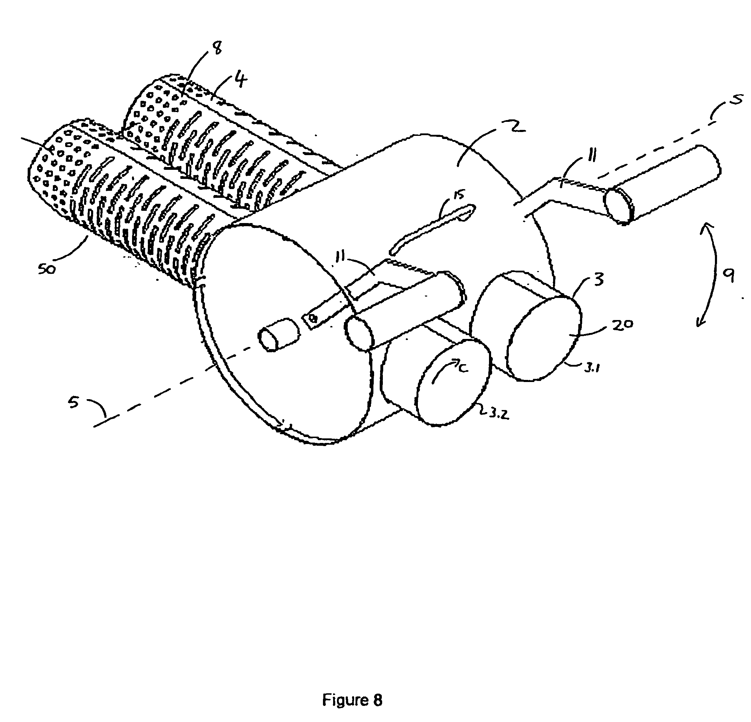

Figures 1 through 8 illustrate the present invention generally.

The Figures generally indicate a cooking apparatus 1 with a drum 2 for an apparatus for heating, cooking, frying, or otherwise preparing a food product by the application of heat.

The drum 2 is provided with at least one pocket or receptacle member in the form of a tube 3 extending through drum 2 and having perforated walls 4 at a lower end of the tube. The tube 3 is rotatable about a horizontal axis 5, i.e. the tube 3 and drum 2 are displaceable between an upper and a lower position by rotation about axis 5 over an arc.

The tube 3 may also rotate (in the direction of arrow C) in a plane perpendicular to the rotational tilt indicated by 9 of the drum 2.

In use, a food product (not shown) is placed in the tube 3 though an open end 20 of said tube 3 and is closed (not shown) and as such, does not include elements which move relative to one another during rotation. Thus, during a rotational movement 9, the entire drum 2 including at least one of the tubes rotate as a unit.

Rotation C of the pockets 3 may assist in the cooking process by turning the food products and improving heat distribution.

The embodiment of the apparatus as shown in the figures includes a drum 2 comprising at least one tube 3, cover means (not shown) for covering the open end 20 of said tube 3, at least one pivot arm 11 to rotatably displace said drum 2, and rotation means for rotatably mounting said drum 2 to a housing 12 such that said drum 2 is rotatably displaceable relative to the housing 12 about a horizontal rotational axis 5.

The tube 3, as shown, comprises a cylindrical body with walls including a plurality of perforations 4 at a lower portion of the cylindrical body. Said lower portion of the cylindrical body defines an integral food pocket 8 for releasably holding the food products. Therefore, the food pocket 8 holds food products during immersion of the food product in a heating liquid 10, such as hot cooking oil.

Each tube 3 with food pocket 8 is an integral unit and may function independently from others of a plurality of tubes 3.1, 3.2, 3.3 and 3.4. The tubes 3 (individually marked 3.1, 3.2, 3.3 and 3.4.), are disposed radially about the axis 5 of the drum 2 and are each provided with the opening 20 for the introduction of food products (not shown) to the interior thereof into the food pocket 8, and for the removal of food products therefrom.

When in operation, the upper opening 20 of the tube 3 is closed by a cover means (not shown) thereby forming a substantially sealed unit for heat flow control, inhibiting spillage, and enhancing safety conditions.

In one embodiment, not shown, the circumferential dimensions of the tube 3 at its open upper end 20 are complementary to the circumferential dimensions of a container (not shown) so that when the container is releasably positioned snugly over the open end 20 of the said tube 3, fried food products may be discharged from the food pocket 8 in the tube 3 into the container (not shown) for serving purposes.

The rotation means for rotatably and removably mounting said drum 2 may take any form which allows for rotation of the drum 2 about its horizontal axis 5, for example, a spindle shaft (not shown).

The position of the drum 2 within the housing 12 is such that a larger part of the volume of the drum 2 is located within a chamber 22 defined by walls of the housing 12.

It is believed to be an advantage that the tubular cooking chamber 3 in cooperation with a hinged front cover 23, form a substantially sealed closure for chamber 22 so that vaporized gasses may condense on an outer portion of the body of the drum 2 facing back wall 25 of housing 12, so that condensed liquids gathered on said drum 2 drip into chamber 22 and consequently into tank 14. In this way, vapor and odor emissions form the chamber 22 are inhibited and limited.

An apparatus 1 incorporating the drum 2 of the present invention may include immersion means 9 for immersing and withdrawing the tube 3 from the tank 14 containing the heat transfer fluid 10 (e.g. water, oil, fat or the like).

The immersion means 9, as shown, includes a displacement mechanism having a pivot arm 11, the pivot arm 11 being fixed to the drum 2. In addition, the said drum 2 includes at least one handle 15 for handling the drum 2 when it is removed from the housing 12 for cleaning purposes.

Since the drum 2 abuts the inner sides of housing 12 to cause a sealed closure of chamber 22 at its front, the hinged front cover 23 needs to be released prior to the removal of drum 2 when cleaning is necessary.

The apparatus 1, as shown, includes at least one heating means 16 in the form of a helical coil positioned in the tank 14 containing a heat transfer fluid 10. The tank 14 is positioned at such a location in the housing 12 that the lower portion of the tube 3 with perforations 4 is immersed in the heating liquid 10 when the tubular cooking chamber 2 is rotatably displaced bout axis 5. It should be appreciated that the heating means 16 may also be positioned in close proximity to the tank 14 containing the heating liquid 10.

In the example as shown, the tank 14 is positioned directly below chamber 22 such that when the tube 3 is immersed in the heating liquid 10, the heating liquid 10 level rises due to the food products and tube 3 displacing the heating liquid 10. When this occurs, heating liquid 10 overflows the tank 14 through a filter 101 which is preferably positioned at the periphery of tank. 14 The advantage being that food debris particles floating on the surface of the heating fluid 10 are urged towards the filter due to the drawing force caused by the direction of overflow. The displacing and overflow of heating liquid 10 may further be enhanced by the positioning of a flat, relatively thin, rigid sheet of uniform thickness (not shown) at the underside 50 of the perforated walls 4 of the tube 3.

The heating means 16 are covered with a suitable material cover 102 to prevent clogging of food debris particles on the surface of the heating means 16. The covering material may have a plurality of holes on either sides thereof to enhance heat transfer to the liquid 10. Preferably below the heating means 16 there is provided a cavity 60 so that a zone 103 within the heating liquid 10 may be created significantly lower in temperature compared to the heating liquid 10 above the heating means 16 i.e. a cold zone. As a result the aforesaid food debris particles may be inhibited from oxidizing and accordingly the time period between replacing heat transfer fluid 10 is delayed. In addition, an outlet 45 may be provided at the lowest point of the tank 14 to drain heat transfer fluid and/or sludge, when necessary.

In a further embodiment of the invention, an improved heat flow 13 may be provided for, wherein the rate of air circulation is increased. This is achieved by a motorized fan 30, in continuous operation, said fan 30 may be positioned in the housing 12, preferably in the vicinity of the tank 14. Ascending vapor escaping from the surface of the heat transfer fluid 10 may be blown to cause a heat flow 13 towards tapered roof 31 of the chamber 22. Since chamber 22 is substantially sealed, the vapor escapes into outlet extraction pipes 33 and into a condenser system 34, located at the outerside of back wall 25. As the vapor cools off in the condenser system 34, a liquid or condensate is formed within the said condenser system 34 and is gathered within a reservoir 36 positioned at the lower end of the condenser system 34. The advantage being that the liquid formed through condensation may seal the contacting surfaces between the adjacent condenser system 34 and the reservoir 36. Thus, vapor flows through condenser system 34 in the direction of heat flow 13 to exit from the condenser system 34 into chamber 22 via inlet pipe 40, which is in flow communication between condenser system 34 and chamber 22. An outlet 41 is provided to drain any access liquid gathered in reservoir 36.

The tubes 3 may take on other forms, for example, providing wedge shaped food receiving pockets, cubic pockets, etc. Additionally the tubes 3 need not share a common drum 2 and may function jointly or individually. The perforations 4 are sized so as to allow the cooking liquid to pass into the interior of the receptacle members while yet being small enough to hold the food product therein.

By way of example, the total wattage of the heating means 16, in the form of an electrical heating element, may be 7 500 watts. The preheat time for such an arrangement can be 10 minutes with a temperature for peak operation ranging between 170 degrees Celcius and 185 degree Celcius.

Thus, it is believed, that the apparatus in accordance with the present invention can provide hot food products with a relatively reduced energy consumption; exploit a lower watt density so as to reduce oil scorching (i.e. oil can be used longer); provide a relatively easy to clean housing and tank (i.e. reduce or eliminate hard to clean squared corners and area); etc.

The specific operation of a particular apparatus in accordance with the present invention will now be described by way of example, in relation to the apparatus shown in the figures. The food product may, for example, be frozen french fries and the cooking liquid an oil suitable for cooking french fries. As mentioned above at the commencement of the cooking cycle the tubes 3 are in the immersion position, the cooking liquid being at a sufficient temperature to cook the food product, and the tubes 3 being empty.

The tubes 3 are the only access to the cooking liquid for frying food products. The perforated lower section of the tubes allow the cooking liquid to enter the tube for frying purposes and to drain away access liquid when the tube 3 is rotatably displaced out of the cooking liquid.

The tubes 3 may be fitted to the drum 2 to allow rotational movement, i.e. in and out of the cooking liquid). Preferably, the tube is allowed to immerse into and remain in the cooking liquid, i.e. frying position, to minimize temperature loss. Covering means is provided for the open end of the tube to ensure a sealed receptacle or tube unit.

A zone, lower in temperature, i.e. cold zone is provided to prevent soaked particles of food products or dust and the like i.e food debris, to oxidize in the hot cooking liquid. As a result, this may extend the time period before the cooking liquid needs to be replaced. Preferably, the cold zone has a tapered lower section having an outlet 45 to allow convenient drainage. The source of heat energy or heating element may be covered to prevent dust particles and the like from sticking to element. Preferably, the heat element is closely bend for effective heat distribution and may be electronically controlled by a sensitive temperature controller to prevent overheating. As a result, this may extend the time period before the cooking liquid needs to be replaced. The heating means may have a safety thermostat connected thereto to prevent overheating as an electrical failure trip switch.

The condenser system 34 is an enclosed unit circulating air through, i.e. condensing water vapor. A driven centrifugal air pump blows air into the frying chamber and forces the hot air into the outlet pipes and then into the condenser tank. The oily/smelly air passes through the condenser filter system before it goes through the centrifugal pump again. Therefore the necessity of a canopy extractor system is alleviated.

The condenser system 34 may be activated and deactivated as required and is not necessarily always on.

Preferably the drum 2 is manually rotated to limit expenses while also lowering the risk of breakage and inoperative times. As a result less wear and tear on movable parts. In addition, the tubular cooking chambers 2 fit into the housing and operate under a gravitational force.

The chamber 22 functions as a sealed unit. The heating liquid is not visible from the outside and also not easily accessible and thus enhancing safety features.

### OPERATING PROCEDURES FOR A SPECIFIC EMBODIMENT OF THE INVENTION

- Ensure that the cooking apparatus is clean and filled with heating liquid to its maximum level
- Empty the condenser system positioned at the back of the apparatus by opening the condenser tank drain valve. This must be done frequently to prevent the tank to overflow. This condenser tank drain valve can not be left open into a bucket, as it will effect the functionality of the air filter system.
- Switch the main on/off switch on which is located on the lower left hand side of the apparatus when standing in front of the apparatus - a red light will come on in the switch when switched on.
- The digital display / temperature controller located below the main switch will display the actual temperature of the heating liquid as it heats up to the preset temperature.
- The timers controlling the frying period are located above the main switch on both sides. It must be pre-set to the desired frying time indicated with a dial type timer.
- When the heating liquid reaches the pre-set temperature, the food product can be placed into the nominated tube which will automatically be in the frying position. The tube may be rotated to ensure proper distribution of the food product within the food pocket.
- Directly after the product has been put into the tube it slides down into the food pocket containing the heating liquid, the timer cycle button must be pressed to activate the timers. They are located above the timers on both sides. Each one represents the two tubes next to it.
- The polystyrene container or tub that was used to pre-portion the products that are being fried must be placed over the used tube to ensure the unit is enclosed.
- If the frying cycle has been completed a bleeper will sound and the green pilot light above the timer cycle button will come on to indicate which side is ready for serving.
- Reset the cycle and cancel the alarm by pushing the timer cycle button.
- Pull down the drum lever to the middle with the drums being in a horizontal position and hold it there for approx.10 seconds. The product will now have time to drain from any heating liquid. A safety mechanism is used to ensure that the food pockets are held in an oil draining position to avoid bum injuries due to hot oil running out of the pockets when the food is discharged.
- Hold onto the polystyrene tub/container and lower the drum lever to the bottom. The product will now slide back into the tub/container which can be removed if full. The drum lever can now be pushed up to the frying position.
- The product can now be served and the apparatus is ready for the next cycle.

### SEQUENCE OF OPERATING STEPS FOR A SPECIFIC EMBODIMENT OF THE INVENTION

1.) Check heating liquid level.(Full)
2.) Main switch on.
3.) Check timers.
4.) Check liquid temperature untill preset temperature is reached.
5.) Insert food product for frying.
6.) Cover tube with tub/container.
7.) Activate cycle timer.
8.) Bleeper - switch cycle off.
9.) Move drum/tubular member to drain position for 10-seconds.
10.) Move drum/tubular member to serving position into tub/container.
11.) Lower drum/tubular member to frying position.

Switch off.
1.) Ensure apparatus is empty of product.
2.) Main switch off.
3.) Close tubes with tubs for standing overnight.

The invention has been described with particular reference to an example, however, it is to be understood that the embodiments of the invention may take other forms without departing from the scope and spirit of the invention.

It will be appreciated that although various aspects of the invention have been described with respect to specific embodiments, alternatives and modifications will be apparent from the present disclosure, which are within the spirit and scope of the present invention.

Therefore, although the present invention has been described and illustrated as described with reference to the accompanying drawings, it is to be clearly understood that the same is by way of illustration and example only, and is not taken by way of limitation. The spirit and scope of the present invention are to be limited only by the terms of claims to be filed with the complete patent specification.

Thus, there is provided a cooking apparatus that compnses a helpful invention and although the described invention is both cheaper and simpler to manufacture it also offers performance advantages compared to conventional similar systems and devices. The disclosure of South African Patent Application 2002/1719, which was filed in English, from which this application claims priority, is incorporated herein by reference as if specifically reproduced here and may be obtained from WIPO once the application becomes open to public inspection.

## Claims

1. A cooker apparatus (1) including:
- a drum (2);
- one or more food receiving pockets (3) associated with the drum (2), said pockets (3) being configured for cooking food product in a heating liquid (10), which pockets (3) have at least one open end (20);
- cover means for covering at least one open end (20) of said pockets (3); and
- rotation means for rotatably mounting said drum (2) and pockets (3) to a housing (12) such that said drum (2) is rotatable with respect to said housing (12) about a horizontal axis (5);
- **characterized by** at least one lever (11) to partially rotate the said drum (2) and pockets (3) about the axis (5) to displace the pockets (3) between an upwardly directed inclined position and a downwardly directed inclined position.

2. A cooker apparatus (1) as claimed in claim 1, wherein the pockets include a tube (3) with a cylindrical body with walls including a plurality of perforations (4) at a lower portion thereof, which lower portion defines an integral food pocket (8) for releasably holding the food.

3. A cooker apparatus (1) as claimed in claim 1 or claim 2, wherein the dimensions of the pocket (3) at its open end (20) corresponds with the dimensions of a cooked food container so that when the container is releasably positioned and snugly fitted over the open end (20) of the said pocket (3), cooked food products are discharged from the food pocket (8) into the container for serving purposes.

4. A cooker apparatus (1) as claimed in any one of the preceding claims, wherein the drums (2) include locking means to prevent unauthorized use thereof and a counter device for measuring the amount of portions fried or cooked, said counter device correlating the number of times the drum (2) was rotationally displaced about its rotational axis (5) through a predetermined arc.

5. A cooker apparatus (1) as claimed in any one of the preceding claims, the apparatus including immersing means (9) for immersing and withdrawing at least the pockets (3) into a receptacle (14) of the heat transfer fluid (10).

6. A cooker apparatus (1) as claimed in claim 5, wherein the immersing means (9) is incorporated in the rotation means.

7. A cooker apparatus (1) as claimed in claim 5 or claim 6, wherein the immersion means (9) includes a displacement mechanism for displacing the pockets (3), the displacement mechanism including a pivot arm (11) fixed to the drum (2).

8. A cooker apparatus (1) as claimed in any one of claims 5 to 7, including at least one heating means (16) in the form of a helical coil positioned in the receptacle (14) of the heat transfer fluid (10).

9. A cooker apparatus (1) as claimed in any one of claims 5 to 8, including a housing (12) in which the heat transfer fluid receptacle (14) is housed wherein the heat transfer fluid receptacle (14) is positioned at such a location in the housing (12) that the perforated portion (4) of the pockets (3) is immersed in the heat transfer fluid (10) when the drum (2) is partially rotationally displaced by a predetermined extent.

10. A cooker apparatus (1) as claimed in any one of claims 5 to 9, wherein the heat transfer receptacle (14) includes a sludge outlet in order to facilitate the removal of food debris thereby prolonging the useful life of the heat transfer fluid (10).

11. A cooker apparatus (1) as claimed in any one of the preceding claims, including vibrating means provided for vibrating the pockets (3) in order to shake off free cooking liquid from food products and/or the pockets (3) after the frying or cooking process has been completed.

12. A cooker apparatus (1) as claimed in any one of claims 5 to 11, including a guide for guiding the food debris towards a cold zone of the heat transfer fluid (10) in the receptacle (14).

13. A cooker apparatus (1) as claimed in claim 12, wherein the guide includes a separation device which prevents the free movement of the food debris through the heat transfer fluid (10) and guides the food debris away from heating elements towards a drain portion of the apparatus (1).

14. A cooker apparatus (1) as claimed in claim 13, wherein the separation device is a sheet having a portion located within the heat transfer fluid (10) and at least partially screening the heating elements from the food debris.

15. A cooker apparatus (1) as claimed in any one of the preceding claims, including a condenser system (34) which includes an air pump which blows air into the housing (12) adjacent where the cooking is taking pace and forces the hot air into the outlet pipes and then into a condenser tank where condensed gasses are collected and non-condensibles are directed back to the pump after passing through a filter system thereby reducing the necessity for a canopy extractor system.

16. A vending machine incorporating an apparatus as claimed in any one of the preceding claims.

## Patentansprüche

1. Gargerät (1) mit Folgendem:
- einer Trommel (2),
- einer oder mehreren der Trommel zugeordneten Nahrungsmittelaufnahmetaschen (3), die dazu ausgelegt sind, ein Nahrungsmittelprodukt in einer Heizflüssigkeit (10) zu garen, und mindestens ein offenes Ende (20) haben,
- einem Abdeckungsmittel zum Abdecken von mindestens einem offenen Ende (20) der Taschen (3) und
- einem Drehmittel zum drehbaren Anbringen der Trommel (2) und der Taschen (3) an einem Gehäuse (12), so dass die Trommel (2) bezüglich des Gehäuses (12) um eine horizontale Achse (5) drehbar ist,
**gekennzeichnet durch** mindestens einen Hebel (11), um die Trommel (2) und die Taschen (3) teilweise um die Achse (5) zu drehen, um die Taschen (3) zwischen einer nach oben gerichteten, geneigten Position und einer nach unten gerichteten, geneigten Position zu bewegen.

2. Gargerät (1) nach Anspruch 1, bei dem die Taschen eine Röhre (3) mit einem zylindrischen Körper aufweisen, dessen Wände an einem unteren Teil mehrere Perforationen (4) aufweisen, wobei der untere Teil eine integrale Nahrungsmitteltasche (8) zum lösbaren Halten der Nahrungsmittel definiert.

3. Gargerät (1) nach Anspruch 1 oder 2, bei dem die Abmessungen der Tasche (3) an ihrem offenen Ende (20) den Abmessungen eines Behälters für gegarte Nahrungsmittel so entsprechen, dass gegarte Nahrungsmittelprodukte zum Servieren aus der Nahrungsmitteltasche (8) in den Behälter ausgetragen werden, wenn der Behälter lösbar positioniert und eng anliegend über dem offenen Ende (20) der Tasche (3) angebracht ist.

4. Gargerät (1) nach einem der vorhergehenden Ansprüche, bei dem die Trommeln (2) ein Verriegelungsmittel zur Verhinderung ihres unbefugten Gebrauchs und eine Zählvorrichtung aufweisen, um die Menge an gebratenen oder gegarten Portionen zu messen, wobei die Zählvorrichtung korreliert, wie oft die Trommel (2) in einem vorbestimmten Bogen um ihre Drehachse (5) gedreht wurde.

5. Gargerät (1) nach einem der vorhergehenden Ansprüche, bei dem das Gerät ein Eintauchmittel (9) aufweist, um mindestens die Taschen (3) in ein Behältnis (14) des Wärmeübertragungsfluids (10) einzutauchen und daraus zurückzuziehen.

6. Gargerät (1) nach Anspruch 5, bei dem das Eintauchmittel (9) in das Drehmittel eingegliedert ist.

7. Gargerät (1) nach Anspruch 5 oder 6, bei dem das Eintauchmittel (9) einen Bewegungsmechanismus zum Bewegen der Taschen (3) aufweist, wobei der Bewegungsmechanismus einen an der Trommel (2) befestigten Schwenkarm (11) aufweist.

8. Gargerät (1) nach einem der Ansprüche 5 bis 7, mit mindestens einem Heizmittel (16) in der Form einer schraubenförmigen Spule, die im Behältnis (14) des Wärmeübertragungsfluids (10) positioniert ist.

9. Gargerät (1) nach einem der Ansprüche 5 bis 8, mit einem Gehäuse (12), in dem das Wärmeübertragungsfluidbehältnis (14) untergebracht ist, wobei das Wärmeübertragungsfluidbehältnis (14) an einem solchen Ort im Gehäuse (12) positioniert ist, dass der perforierte Abschnitt (4) der Taschen (3) im Wärmeübertragungsfluid (10) eingetaucht ist, wenn die Trommel (2) in einem vorbestimmten Ausmaß teilweise gedreht wird.

10. Gargerät (1) nach einem der Ansprüche 5 bis 9, bei dem das Wärmeübertragungsbehältnis (14) einen Rückstandauslass aufweist, um das Entfernen von Nahrungsmittelüberresten zu erleichtern und **dadurch** die Gebrauchslebensdauer des Wärmeübertragungsfluids (10) zu verlängern.

11. Gargerät (1) nach einem der vorhergehenden Ansprüche, mit einem zum Schütteln der Taschen (3) bereitgestellten Schüttelmittel, um nach dem Abschluss des Brat- oder Garvorgangs lose Garflüssigkeit von Nahrungsmittelprodukten und/oder den Taschen (3) abzuschütteln.

12. Gargerät (1) nach einem der Ansprüche 5 bis 11, mit einer Führung zum Führen der Nahrungsmittelüberreste zu einer kalten Zone des Wärmeübertragungsfluids (10) im Behältnis (14).

13. Gargerät (1) nach Anspruch 12, bei dem die Führung eine Trennvorrichtung aufweist, die verhindert, dass sich die Nahrungsmittelüberreste frei durch das Wärmeübertragungsfluid (10) bewegen, und die Nahrungsmittelüberreste von den Heizelementen weg und zu einem Abflussabschnitt des Geräts (1) führt.

14. Gargerät (1) nach Anspruch 13, bei dem es sich bei der Trennvorrichtung um eine Fläche handelt, von der ein Abschnitt im Wärmeübertragungsfluid (10) angeordnet ist, der die Heizelemente mindestens teilweise von den Nahrungsmittelüberresten abschirmt.

15. Gargerät (1) nach einem der vorhergehenden Ansprüche, mit einem Kondensatorsystem (34), das eine Luftpumpe aufweist, die Luft in das Gehäuse (12) in der Nähe des Ortes bläst, an dem das Garen stattfindet, und Heißluft in die Auslassrohre und dann in den Kondensatortank drückt, wo kondensierte Gase gesammelt werden und was nicht kondensierbar ist nach Durchlaufen eines Filtersystems zur Pumpe zurückgeführt wird, wodurch weniger Bedarf an einem Haubenabzugssystem besteht.

16. Verkaufsautomat mit einem Gerät nach einem der vorhergehenden Ansprüche.

## Revendications

1. Appareil de cuisson (1), comportant :
- un tambour (2) ;
- une ou plusieurs cavités (3) destinées à recevoir des aliments, associées au tambour (2), lesdites cavités (3) étant configurées de façon à cuire des produits alimentaires dans un liquide de chauffage (10), lesquelles cavités (3) présentent au moins une extrémité ouverte (20) ;
- des moyens de recouvrement pour recouvrir au moins une extrémité ouverte (20) desdites cavités (3) ; et
- des moyens de rotation pour monter à rotation ledit tambour (2) et lesdites cavités (3) sur un boîtier (12) de telle sorte que ledit tambour (2) puisse tourner par rapport audit boîtier (12) autour d'un axe horizontal (5) ;
**caractérisé par**
- au moins un levier (11) destiné à faire partiellement tourner ledit tambour (2) et lesdites cavités (3) autour de l'axe (5) pour déplacer les cavités (3) entre une position inclinée dirigée vers le haut et une position inclinée dirigée vers le bas.

2. Appareil de cuisson (1) selon la revendication 1, dans lequel les cavités comportent un tube (3) ayant un corps cylindrique avec des parois comportant une pluralité de perforations (4) au niveau d'une portion inférieure de celles-ci, laquelle portion inférieure définit une cavité intégrale (8) pour les aliments destinée à retenir les aliments de manière à pouvoir les libérer.

3. Appareil de cuisson (1) selon la revendication 1 ou 2, dans lequel les dimensions de la cavité (3) au niveau de son extrémité ouverte (20) correspondent aux dimensions d'un récipient d'aliments cuits de sorte que lorsque le récipient est positionné de manière à pouvoir être libéré et est ajusté étroitement par-dessus l'ouverture ouverte (20) de ladite cavité (3), les produits alimentaires cuits soient déchargés de la cavité pour aliments (8) dans le récipient en vue de les servir.

4. Appareil de cuisson (1) selon l'une quelconque des revendications précédentes, dans lequel le tambour (2) comporte des moyens de verrouillage pour empêcher son utilisation non autorisée et un dispositif de comptage pour mesurer la quantité de portions frites ou cuites, ledit dispositif de comptage corrélant le nombre de fois que le tambour (2) a été déplacé en rotation autour de son axe de rotation (5) sur un arc prédéterminé.

5. Appareil de cuisson (1) selon l'une quelconque des revendications précédentes, l'appareil comportant un moyen d'immersion (9) pour immerger et retirer au moins les cavités (3) dans un réceptacle (14) du fluide de transfert thermique (10).

6. Appareil de cuisson (1) selon la revendication 5, dans lequel le moyen d'immersion (9) est incorporé dans le moyen de rotation.

7. Appareil de cuisson (1) selon la revendication 5 ou 6, dans lequel le moyen d'immersion (9) comporte un mécanisme de déplacement pour déplacer les cavités (3), le mécanisme de déplacement comportant un bras pivotant (11) fixé au tambour (2).

8. Appareil de cuisson (1) selon l'une quelconque des revendications 5 à 7, comportant au moins un moyen de chauffage (16) sous forme d'un enroulement hélicoidal positionné dans le réceptacle (14) du fluide de transfert thermique (10).

9. Appareil de cuisson (1) selon l'une quelconque des revendications 5 à 8, comportant un boîtier (12) dans lequel le réceptacle (14) de fluide de transfert thermique est reçu, le réceptacle (14) de fluide de transfert thermique étant positionné en un emplacement dans le boîtier (12) de sorte que la portion perforée (4) des cavités (3) soit immergée dans le fluide de transfert thermique (10) lorsque le tambour (2) est déplacé partiellement en rotation dans une mesure prédéterminée.

10. Appareil de cuisson (1) selon l'une quelconque des revendications 5 à 9, dans lequel le réceptacle (14) de fluide de transfert thermique comporte une sortie de bouillie afin de faciliter le retrait de débris alimentaires, ce qui prolonge ainsi la durée de vie du fluide de transfert thermique (10).

11. Appareil de cuisson (1) selon l'une quelconque des revendications précédentes, comportant un moyen de vibration prévu pour faire vibrer les cavités (3) afin de détacher par vibrations le liquide de cuisson des produits alimentaires et/ou des cavités (3) après que l'opération de friture ou de cuisson est terminée.

12. Appareil de cuisson (1) selon l'une quelconque des revendications 5 à 11, comportant un guide pour guider les débris alimentaires vers une zone froide du fluide de transfert thermique (10) dans le réceptacle (14).

13. Appareil de cuisson (1) selon la revendication 12, dans lequel le guide comporte un dispositif de séparation qui empêche le libre mouvement des débris alimentaires à travers le fluide de transfert thermique (10) et qui guide les débris alimentaires à l'écart des éléments chauffants vers une portion de drain de l'appareil (1).

14. Appareil de cuisson (1) selon la revendication 13, dans lequel le dispositif de séparation est une feuille ayant une portion située dans le fluide de transfert thermique (10) et au criblant au moins partiellement les éléments chauffants des débris alimentaires.

15. Appareil de cuisson (1) selon l'une quelconque des revendications précédentes, comportant un système de condenseur (34) qui comporte une pompe à air qui souffle de l'air dans le boîtier (12) à proximité de la zone où a lieu la cuisson et qui force l'air chaud dans les tuyaux de sortie puis dans un réservoir du condenseur où les gaz condensés sont recueillis et les parties non condensables sont redirigées vers la pompe après avoir passé par un système de filtre, en réduisant ainsi la nécessité d'un système d'extraction de type auvent.

16. Distributeur incorporant un appareil selon l'une quelconque des revendications précédentes.
